# EUROPÄISCHE PATENTSCHRIFT

(11) **EP 1 153 830 B1**
(45) Veröffentlichungstag und Bekanntmachung des Hinweises auf die Patenterteilung: **26.01.2005**
(21) Anmeldenummer: 01110712.5
(22) Anmeldetag: 03.05.2001
(51) Int. Cl.: B64D 7/00

(54) **Vorrichtung zur Verringerung der Installationsmomente von Aussenlasten an Flugzeugen**
Device for reducing aerodynamic loads on equipment externally mounted on aircraft
Dispositif pour réduire les forces aérodynamiques exercées sur une charge extérieure d'un aéronef

(30) Priorität: 09.05.2000 DE 10022455
(43) Veröffentlichungstag der Anmeldung: 14.11.2001
(73) Patentinhaber: EADS Deutschland GmbH, 81663 München (DE)
(72) Erfinder: Deslandes, Roland, Dr., 82008 Unterhaching (DE); Donauer, Stefan, 82538 Geretsried (DE); Pantele, Alois, 81477 München (DE)

(56) Entgegenhaltungen:
- US-A- 2 749 064
- US-A- 4 225 102
- US-A- 5 476 238

## Beschreibung

Die Erfindung betrifft eine Befestigungsstation an der Rumpfunterseite eines Flugzeugs zum Anbringen einer Außenlast , wobei die zumindest eine Außenlast jede Art von außerhalb des Flugzeugs lösbar oder nicht lösbar angeordneter Einrichtung oder auch militärisches Gerät wie Flugkörper sein kann.

Bei derartigen Außenlasten an Flugzeugen müssen die Kräfte und Momente, die an der Befestigung von Außenlasten entstehen, die sogenannten Installationsmomente, möglichst gering gehalten werden. Sind diese gering, wirkt sich dies auch positiv auf das Abgangsverhalten der Außenlasten aus.

Bisher wurden Installationsmomente durch eine entsprechende Formgebung der Außenlasten und das Abgangsverhalten derselben durch Steuerungsmaßnahmen des Flugzeugs oder der Außenlast nur unzureichend beeinflußt. Hinzu kommt, daß die bekannten Maßnahmen einen großen konstruktiven bzw. System-Aufwand erforderlich machen.

Aus der US 5 476 238 ist eine Befestigungsvorrichtung zur Anbringung von Außenlasten an der Unterseite eines Flugzeugs bekannt, die eine langgestreckte, flache Kastenstruktur umfaßt, die zur Anbringung an der Rumpfunterseite des Flugzeugs vorgesehen ist. Die Kastenstruktur besteht aus einem vorderen Element und einem hinteren Element 47, die jeweils hohl ausgebildet und aus Titanblech hergestellt sind. Die untere Begrenzung der hohlen Kastenstruktur ist durch einen Boden gebildet, der sich im wesentlichen eben vom vorderen Ende der Kastenstruktur zu deren hinteren Ende erstreckt.

An diesem Boden sind drei Pylons angeordnet, ein erster Pylon auf der Mittellinie der Kastenstruktur, die beiden anderen Pylons an den gegenüberliegenden Seiten derselben, wobei die seitlichen Pylons um einen Winkel von 24 Grad gegen die Vertikalebene geneigt sind. Die drei Pylons springen somit vom Boden der Kastenstruktur bzw. von deren Seiten nach unten bzw. schräg seitlich vor. Am vorderen Ende der Kastenstruktur ist ein aerodynamisch wirksamer Ansatz vorgesehen, welcher zwei gabelförmig vorspringende, seitlich angeordnete Zinken und eine dazwischen angeordnete rechteckige rampenförmige Mittelplatte umfaßt. Die rampenförmige Mittelplatte verläuft unter einem Winkel von ungefähr Grad vom Boden des Flugzeugrumpfs zum Boden des Kastenelements, wo sie mit einem Knick in den letzteren übergeht. Der vordere Ansatz dient zur Verminderung des aerodynamischen Widerstands des Flugzeugs. Zum gleichen Zwecke ist auch am rückwärtigen Ende der Kastenstruktur ein rückwärtiger Ansatz vorgesehen.

Die Aufgabe der Erfindung ist es, eine Befestigungsstation an der Rumpfunterseite eines Flugzeugs zum Anbringen einer Außenlast bereitzustellen, durch die mit möglichst geringem Aufwand eine Verringerung der Installationsmomente der Außenlast und eine aerodynamische Stabilisierung derselben erreicht wird.

Diese Aufgabe wird mit den Merkmalen des Anspruchs 1 gelöst.

Weitere vorteilhafte Ausführungsformen sind in den auf diesen rückbezogenen Unteransprüchen angegeben. Erfindungsgemäß ist eine Rampe vorgesehen, die in Bezug auf die Flugrichtung unter dem Flugzeugrumpf vor den Schulterpylons angebracht wird, um die Momente der Außenlast zu beeinflussen.

Die Abrißkante dieser Rampe sowie ihre Gestaltung beeinflußt dabei nur in erster Linie die Nickmomente der Außenlasten. Die Rampensteigung beeinflußt außerdem die Giermomente, die durch zusätzlich angebrachte Grenzschichtzäune beeinflußt werden.

Die Erfindung bezieht sich dabei auf Außenlasten, die nicht für einen Abwurf vorgesehen sind, sowie auf abwerfbare Außenlasten. Eine Außenlast kann z.B. eine Nutzlast, ein Tank, ein Gerät oder ein Flugkörper sein.

Im folgenden wird die Erfindung anhand der beiliegenden Figuren beschrieben, die zeigen:
- Fig. 1: eine schematische Seitenansicht einer Schulterstation für eine Außenlast am unteren Bereich eines Flugzeugsrumpfes mit einer Ausführungsform der erfindungsgemäßen Rampe, wobei diese mit Grenzschichtzäunen versehen ist,

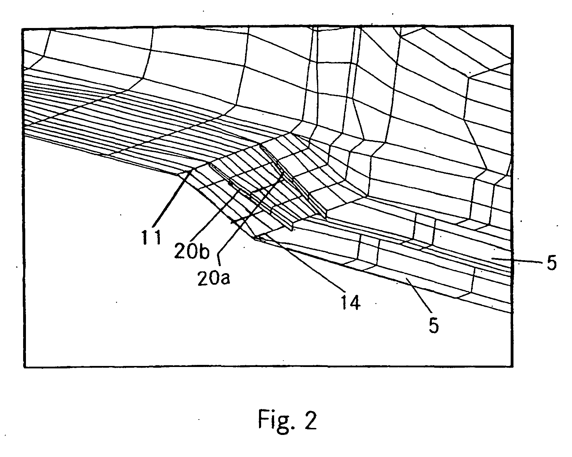

- Fig. 2: eine perspektivische Ansicht der Rumpf-Unterseite mit der Rampe mit den Grenzschichtzäunen,

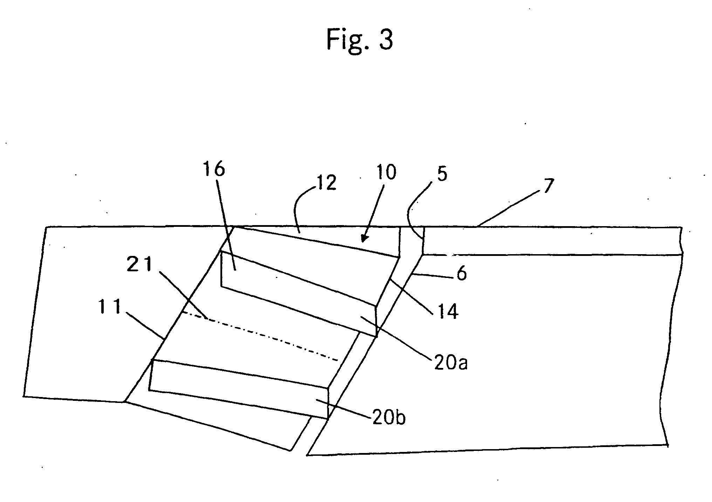

- Fig. 3: eine perspektivische Ansicht der Ausführungsform der Rampe mit den Grenzschichtzäunen nach der Figur 1.

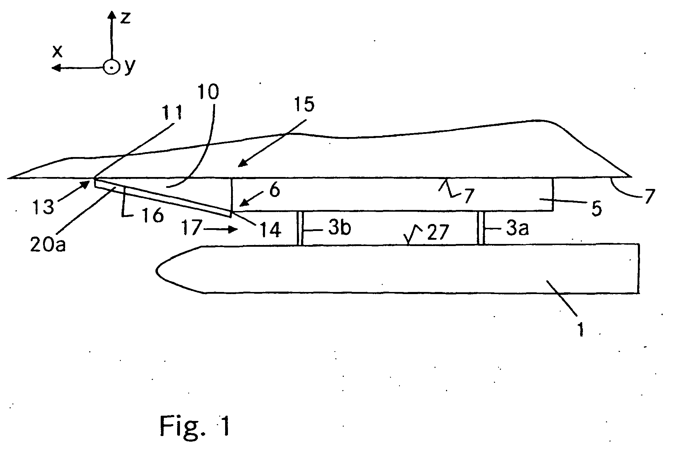

Flugzeug-Außenlasten 1 sind mittels Befestigungselementen an zumindest einer Befestigungsstation 3a, 3b an der Unterseite 7 des jeweiligen Flugzeugrumpfes lösbar angebracht. Die Befestigungsstationen 3a, 3b können an einem Pylon 5 angeordnet sein, der ein außermittig oder mittig angeordneter Unterrumpf-Pylon sein kann. In die Fig. 1 ist ein Koordinatensystem mit den Achsen x, y, z eingetragen, wobei die x-Achse in der Flugrichtung und die z-Achse in Richtung der Hochachse des Flugzeugs verläuft. Es können für die Anwendung der Erfindung ein einzelner Flugköper oder eine Außenlast oder mehrere derselben nebeneinander angeordnet sein. Die Rampe 10 kann auch dann vorgesehen sein, wenn die Außenlast ohne Pylons 5 an der Unterrumpf-Struktur angebracht ist.

Erfindungsgemäß ist vor dem Pylon 5 eine Kompensations-Rampe 10, im folgenden kurz Rampe genannt, an der Unterseite 7 des Rumpfes angeordnet. Diese verläuft entgegen der Flugrichtung x von einer Stelle 11 mit einem dort angeordneten Rampenwinkel 12, so daß sich von der Stelle 11, an der sich auch die Vorderkante 13 der Rampe befindet, diese mit größer werdender Dicke bis zur Hinterkante oder Abrißkante 14 an der dem Rampenwinkel 12 gegenüberliegenden Ende an dem Pylon 5. Vorzugsweise ist an der Abrißkante 14 die Höhe der Rampe 10 aus aerodynamischen Gründen im wesentlichen gleich der Höhe dem Pylon 5. Dabei bildet sich zwischen der Abrißkante 14 und der dieser zugewandten Außenseite der Außenlast oder des Flugkörpers 1 ein Spalt 17 aus. Die Rampe 10 ist unterhalb der bezogen auf die Flugrichtung vorderen Hälfte der Außenlast 1 angeordnet.

Die Rampe ist einteilig gebildet. Die von der Stelle 11 zur Abrißkante 14 verlaufende schräge Fläche oder die Außenseite 16 ist vorzugsweise als Ebene gestaltet, kann aber allgemein sowohl in y-Richtung als auch quer dazu, also in ihrer Längsrichtung gekrümmt als auch aus verschiedenen ebenen Abschnitten sowie als eine Kombination davon gebildet sein. Insbesondere kann die Außenseite 16 auch ein S-Schlag in x-Richtung aufweisen. Die Rampe 10 und Teile der Rampenfläche kann bzw. können aus einer oder mehreren Teilfläche(n) gestaltet werden, die zumindest fest oder verstellbar sein kann.

An der Außenseite 16 der Rampe 10 sind zumindest zwei Grenzschichtzäune 20a, 20b angeordnet. Diese verlaufen symmetrisch zu einer Symmetrieachse 21, wobei sich der Abstand der Grenzschichtzäune 20a, 20b zueinander von der Vorderkante 13 bis zur Abrißkante 14 verringert. Die Grenzschichtzäune 20a, 20b verlaufen vorzugsweise über die gesamte Länge der Außenseite 16 der Rampe 10. Sie können auch mit einer von der Vorderkante 13 bis zur Endfläche 15 oder kleiner werdenden Höhe 25 gebildet sein.

Die stromabwärts gerichtete Rückseite 15 der Rampe 10 kann auch als Ablauframpe gestaltet sein. Ein Ablaufprofil dient dabei der Beruhigung und Stabilisierung der an der Abrißkante 14 entstehenden Winkel.

Die erfindungsgemäße Rampe 10 wird bei Außenlasten, die an Unterrumpf-Pylons 5 getragen werden, vorgesehen, um die unter anderem an den Stationen 3b auftretenden Installationsmomente abzuschwächen, da die Rampe 10 strömungsphysikalisch auf die Installationaerodynamik einwirkt. Dadurch wird zusätzlich im Falle eines Abwurfs das Abgangsverhalten verbessert, da große Winkelbewegungen unterbunden werden, die beispielsweise Kollisionen der Außenlast mit der Flugzeugkontur herbeiführen körmen. Die Rampe 10 wirkt auf folgende Weise: Die Ablösung an seiner Abrißkante 14 bewirkt das Entstehen eines Unterdruckfeldes an der Außenlast-Oberseite 27, d.h. der der Unterseite 7 des Rumpfes zugewandten Seite der Außenlast 1. Dadurch wird das abnickende (Nosedown) Nickmomentder Außenlast 1 abgeschwächt. Die Rampe kann auch das Giermoment der Außenlast beeinflussen, insbesondere wenn die Außenlast seitlich beabstandet von der Flugzeug-Längsachse aufgehängt ist.

Insbesondere für den Fall, daß mehrere Flugkörper oder Außenlasten nebeneinander angeordnet sind, wird durch die Rampe die Strömung umgelenkt und zwischen den den einander zugewandten Außenlast-Seiten in der Mitte beschleunigt. Dadurch werden die Giermomente kompensiert, also verringert.

Die Rampe kann durch Voreinstellung der Neigung, d.h. des Rampenwinkels 13 in ihrer Wirkung verändert werden. In Abhängigkeit der Größe des Rampenwinkels 12 wird das Nickmoment und auch das Giermoment einer hängenden oder abgehenden Außenlast beeinflußt. Der Spalt 17 sowie die Abrißkante 14 sind maßgbend für die Nickmomente beim Abgang der Außenlast 1. Die im Lee der Rampe 10 entstehende Saugströmung reduziert die Größe der abnickenden Momente der Außenlast. Die Höhe des Spalts 17 optimiert die Stärke dieser Saugströmung.

Die Grenzschichtzäune 20 verstärken die genannten Wirkungen. Die Grenzschichtzäune 20 verstärken diesen Einfluß sowie auch die Dauer der Giermomenten-Absenkung entlang der Trajektorie durch Bündelung der nach unten abgelenkten Rampenströmung.

Durch Anpassung der geometrischen Größen der Rampe 10 lassen sich sämtliche Einflußfaktoren auf diese Wirkungen verändern und die Wirkungen gezielt erreichen. Dadurch wird bei der Verwendung mehrerer Außenlasten nebeneinander insbesondere ein kollisionsfreier Abgang erreicht. Es ist klar, dass die geometrischen Abmessungen von einer Mehrzahl von Parametern und Einsatzbedinungen abhängen, z.B. von der jeweiligen Flugzeugart, der Art der Außenlasten oder Flugkörper, den beabsichtigten Absetz-Geschwindigkeiten, der Geometrie der Pylons 5.

Der Rampenwinkel 12 liegt vorzugsweise im Bereich zwischen 5 und 45 Grad, wobei sich die beschriebene Wirkung erfahrungsgemäß insbesondere in einem Bereich zwischen 15 und 25 Grad einstellen. Als besonders günstige Höhe des Spalts 17 für Kampfflugzeuge hat sich der Bereich zwischen 50 und 250 mm erwiesen. Die Länge der Rampe entlang der x-Richtung liegt vorzugsweise zwischen 400 und 700 mm. Die Rampenbreite wird durch die Anordnung und Formgebung der Außenlast bestimmt. Sie überschreitet nicht die Breite der Unterrumpffläche.

## Patentansprüche

1. Befestigungsstation (3a, 3b) an der Rumpfunterseite (7) eines Flugzeugs zum Anbringen einer Außenlast mit einer an der Rumpfunterseite (7) bezüglich der Flugrichtung vor der Befestigungsstation (3a, 3b) angeordneten aerodynamisch wirksamen Rampe (10), deren Höhe von einer Rampenvorderkante (13) zu einer eine Abrißkante (14) bildenden Rampenhinterkante in Richtung zur Befestigungsstation (3a, 3b) hin zunimmt, um eine Saugströmung zu erzeugen,
**dadurch gekennzeichnet,**
**dass** zumindest zwei Grenzschichtzäune (20a, 20b) auf der Außenseite (16) der Rampe (10) vorgesehen sind, die symmetrisch zur Längsachse (21) der schrägen Außenseite (16) verlaufen.

2. Außenlast-Befestigungsvorrichtung nach Anspruch 1, **dadurch gekennzeichnet, daß** an der stromabwärts gelegenen Rückseite (15) der Rampe (10) eine aerodynamisch wirksame Ablauframpe ausgebildet ist.

3. Außenlast-Befestigungsvorrichtung nach Anspruch 1 oder 2, **dadurch gekennzeichnet, daß** stromabwärts der Rampe (10) mindestens ein Pylon (5) angeordnet ist.

4. Außenlast-Befestigungsvorrichtung nach Anspruch 3, **dadurch gekennzeichnet, daß** die Höhe der Rampe (10) im wesentlichen gleich der Höhe des mindestens einen Pylons (5) ist.

5. Außenlast-Befestigungsvorrichtung nach einem der voranstehenden Ansprüche, **dadurch gekennzeichnet, daß** die Höhe eines zwischen Abrißkante (14) und der dieser zugewandten Oberseite (27) der Außenlast (1) gebildeten Spalts (17) zwischen 50 und 250 mm beträgt.

6. Außenlast-Befestigungsvorrichtung nach einem der voranstehenden Ansprüche, **dadurch gekennzeichnet, daß** der Rampenwinkel (12) zwischen 15 und 25 Grad beträgt.

7. Außenlast-Befestigungsvorrichtung nach einem der voranstehenden Ansprüche, **dadurch gekennzeichnet, daß** die Länge der Rampe (10) zwischen 400 und 700 mm beträgt.

## Claims

1. Mounting station (3a, 3b) on the fuselage underside (7) of an aircraft for attaching an external load, with an aerodynamically effective ramp (10) arranged on the fuselage underside (7) ahead of the mounting station (3a, 3b) with reference to the flight direction, the height of which ramp increases in the direction of the mounting station (3a, 3b) from a ramp front edge (13) towards a ramp rear edge forming a break-off edge (14) in order to generate a suction flow, **characterized in that** at least two boundary layer fences (20a, 20b) are provided on the outside (16) of the ramp (10) that run symmetrically to the longitudinal axis (21) of the oblique outside (16).

2. External load mounting device according to claim 1, **characterized in that** on the rear side (15) of the ramp (10) situated downstream an aerodynamically effective run-off ramp is formed.

3. External load mounting device according to claim 1 or 2, **characterized in that** at least one pylon (5) is arranged downstream of the ramp (10).

4. External load mounting device according to claim 3, **characterized in that** the height of the ramp (10) is substantially equal to the height of the at least one pylon (5).

5. External load mounting device according to one of the preceding claims, **characterized in that** the height of a gap (17) formed between the break-off edge (14) and the upper side (27) of the external load (1) facing this is between 50 and 250 mm.

6. External load mounting device according to one of the preceding claims, **characterized in that** the ramp angle (12) is between 15 and 25 degrees.

7. External load mounting device according to one of the preceding claims, **characterized in that** the length of the ramp (10) is between 400 and 700 mm.

## Revendications

1. Poste de fixation (3a, 3b) sur le côté inférieur (7) du fuselage d'un avion pour monter une charge extérieure, avec une rampe (10) à action aérodynamique, disposée sur le côté inférieur (7) du fuselage devant le poste de fixation (3a, 3b) par rapport à la direction de vol et dont la hauteur augmente, en direction du poste de fixation (3a, 3b), d'un bord avant de rampe (13) jusqu'à une arête arrière de rampe formant une arête de décollement (14), pour générer un écoulement d'aspiration,
**caractérisé en ce**
**qu'**au moins deux barrières de couche limite (20a, 20b), qui s'étendent symétriquement par rapport à l'axe longitudinal (21) du côté extérieur oblique (16), sont prévues sur le côté extérieur (16) de la rampe (10).

2. Dispositif de fixation de charge extérieure suivant la revendication 1, **caractérisé en ce qu'**une rampe d'écoulement à action aérodynamique est réalisée sur le côté arrière (15), placé en aval, de la rampe (10).

3. Dispositif de fixation de charge extérieure suivant l'une des revendications 1 et 2, **caractérisé en ce qu**'au moins un pylône (5) est disposé en aval de la rampe (10).

4. Dispositif de fixation de charge extérieure suivant la revendication 3, **caractérisé en ce que** la hauteur de la rampe (10) est sensiblement égale à la hauteur du au moins un pylône (5).

5. Dispositif de fixation de charge extérieure suivant l'une des revendications précédentes, **caractérisé en ce que** la hauteur d'une fente (17) formée entre l'arête de décollement (14) et le côté supérieur (27), tourné vers cette dernière, de la charge extérieure (1) est comprise entre 50 et 250 mm.

6. Dispositif de fixation de charge extérieure suivant l'une des revendications précédentes, **caractérisé en ce que** l'angle de rampe (12) est compris entre 15 et 25 degrés.

7. Dispositif de fixation de charge extérieure suivant l'une des revendications précédentes, **caractérisé en ce que** la longueur de la rampe (10) est comprise entre 400 et 700 mm.
